# FASCICULE DE BREVET EUROPEEN

(11) **EP 0 778 082 B1**
(45) Date de publication et mention de la délivrance du brevet: **14.02.2001**
(21) Numéro de dépôt: 96402507.6
(22) Date de dépôt: 21.11.1996
(51) Int. Cl.: B01J 8/00, B01J 8/02, B01D 53/04

(54) **Installation de traitement d'au moins un fluide et utilisation pour la séparation d'au moins un constituant d'un mélange gazeux**
Vorrichtung zur Behandlung von mindestens einem Fluid und Verwendung davon zur Abscheidung mindestens einem Bestandteil aus einer Gasmischung
Apparatus for the treatment of at least one fluid and the use thereof in the separation of at least one constituent from a gaseous mixture

(30) Priorité: 05.12.1995 FR 9514335
(43) Date de publication de la demande: 11.06.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Lehman, Jean-Yves, 94700 Maisons Alfort (FR); Bosquain, Maurice, 89110 Sommecaise (FR)
(74) Mandataire: Le Moenner, Gabriel

(56) Documents cités:
- EP-A- 0 636 399
- GB-A- 1 204 634
- GB-A- 1 309 427
- US-A- 1 934 968
- US-A- 2 127 561
- US-A- 3 950 139
- US-A- 3 960 520
- US-A- 4 033 727
- PATENT ABSTRACTS OF JAPAN vol. 95, no. 8, 29 Septembre 1995 & JP 07 116450 A (TOSHIO AWAJI), 9 Mai 1995,

## Description

La présente invention concerne des installations de traitement d'au moins un fluide, du type comprenant au moins une masse de matériau particulaire dans laquelle circule le fluide selon une direction principale.

Des installations de ce type trouvent de larges applications dans la technique, avec des matériaux particulaires tels que des catalyseurs et/ou des adsorbants. Dans la majeure partie de ces applications, l'obtention de performances optimales est conditionnée par une bonne maîtrise des flux du fluide au travers de la masse d'adsorbant.

Pour une installation à circulation de fluide verticale, le document JP-A-7116450 décrit l'association d'une plaque déflectrice transversale vers l'amont et d'un déflecteur annulaire de paroi convergeant vers l'aval.

Pour une installation à circulation de fluide horizontale, le document US-A-1934968 décrit l'aménagement de déflecteurs transversaux s'étendant perpendiculairement du plafond du récipient.

La présente invention a pour objet de proposer une installation de traitement de fluide à circulation de fluide horizontale améliorée permettant, de façon simple, peu onéreuse et efficace, de canaliser les lignes de flux de fluide dans la zone frontière supérieure de la masse de matériau particulaire sans désorganiser cette masse ni sa mise en place dans un conteneur.

Pour ce faire, l'invention propose une installation selon la revendication 1.

L'invention a pour autre objet l'utilisation d'une telle installation pour la séparation d'au moins un constituant d'un mélange gazeux, par exemple le séchage ou l'épuration d'un gaz et/ou la séparation d'au moins un constituant d'un mélange gazeux, par exemple l'épuration d'un flux d'air à distiller ou la production d'oxygène et/ou d'azote à partir d'un flux d'air.

D'autres caractéristiques et les avantages de la présente invention ressortiront de la description de modes de réalisation, donnés à titre illustratif mais nullement limitatif, faite en relation avec les dessins annexés, sur lesquels :
- la figure 1 est une vue schématique en coupe d'une installation à circulation de fluide verticale qui ne fait pas partie de l'invention revendiquée ;
- la figure 2 est une vue en coupe schématique partielle d'un premier mode de réalisation d'une installation selon l'invention ;
- la figure 3 est une vue en coupe partielle analogue à celle de la figure 2 et montrant un second mode de réalisation ; et
- la figure 4 est une vue en coupe verticale d'un troisième mode de réalisation d'une installation selon l'invention à lit de matériau particulaire annulaire.

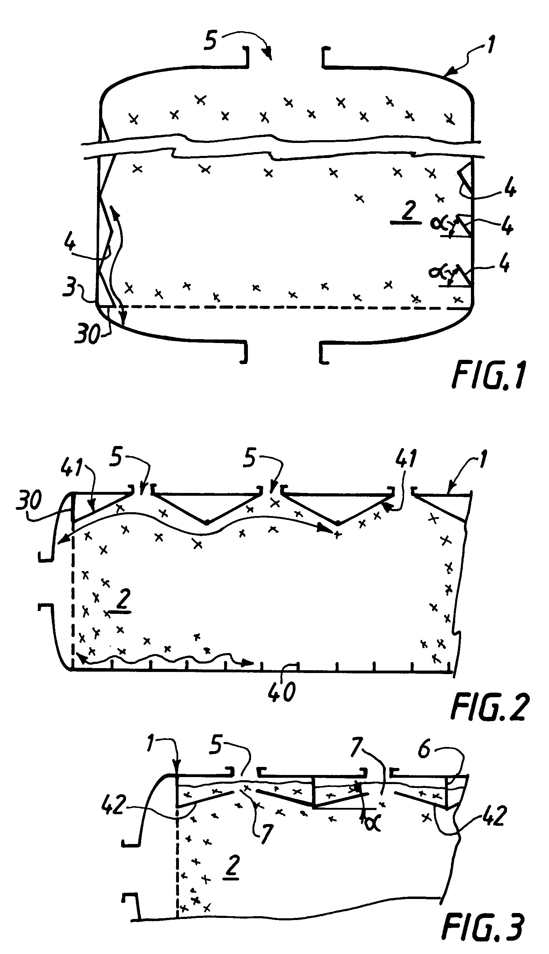

Sur la figure 1, correspondant à une installation classique à circulation de fluide verticale, on reconnaît le contour d'un récipient 1 vertical, typiquement de révolution, contenant au moins une masse de matériau particulaire 2, par exemple un adsorbant, pour l'épuration ou la séparation d'un mélange gazeux, reposant sur une cloison de fond perforée. Pour allonger localement le chemin parcouru par le fluide le long des parois de la virole périphérique 3 du récipient 1, et pour contraindre le fluide à rencontrer un plus grand nombre de particules de matériau à cet endroit, sur la virole 3 sont rapportées, à intervalles réguliers, des surfaces déflectrices 4, s'étendant sur une faible distance vers le haut et vers l'intérieur dans le récipient et formant avec l'horizontale un angle α supérieur à l'angle de talus naturel du matériau particulaire déversé sur un support receveur, évitant ainsi la formation d'une cavité avec talus libre dans le matériau particulaire sous ladite surface. La surface déflectrice peut être complétée par un voile pour constituer, comme représenté en haut à droite et à gauche sur la figure 1, des éléments déflecteurs en V, symétriques ou non, jointifs ou non. Avec un tel agencement, on comprendra que le fluide devra suivre, sur les bords verticaux de la masse 2, un chemin onduleux comme figuré sur la partie gauche de la figure 1, en rallongeant ainsi son chemin dans une zone où l'on constate classiquement des voies de bipasse du matériau particulaire, dans que les surfaces déflectrices 4 ne s'opposent à un remplissage homogène du récipient 1 par déversement du matériau particulaire via l'orifice supérieur 5 de chargement du récipient 1.

Sur la figure 2, on a représenté une première installation à circulation de fluide verticale avec un récipient 1 à disposition horizontale, la masse 2 de matériau particulaire reposant sur un fond horizontal du récipient 1, le matériau particulaire étant déversé dans ce dernier par des orifices de chargement 5 répartis le long de la surface supérieure du récipient 1. Outre des déflecteurs 4 (non représentés), sur les parois latérales du récipient 1, ce dernier comprend des déflecteurs transversaux verticaux 40, constitués par exemple par de simples fers ou anneaux plats, disposés à intervalles réguliers le long de la paroi de fond du récipient, et les orifices de chargement supérieurs 5 sont pourvus de hottes de distribution 41 en forme de troncs de pyramide à bases jointives. Comme figuré par les flèches sur la figure 2, l'agencement selon l'invention impose au fluide un trajet sinueux également le long des extrémités supérieure et inférieure en évitant les bipasses au niveau des zones de chargement gravitaires. On notera, sur les figures 1 et 2, la présence d'un voile transversal 30 à l'entrée/sortie de la masse 2 pour y favoriser, en aval, un élargissement local du flux et donc un ralentissement local au voisinage de la paroi.

Sur la figure 3, on a représenté une variante de réalisation de l'agencement horizontal de la figure 2. Ici, les déflecteurs supérieurs sont constitués par des paires de plaques 42 convergeant l'une vers l'autre, vers les orifices 5, à partir de cloisons de suspension 6, mais laissant une fente ou ouverture de chargement 7 en regard de chaque orifice 5, autorisant ainsi un remplissage aisé du récipient, poursuivi jusqu'à noyer les plaques 42 dans une réserve haute de matériau particulaire, permettant notamment une reprise de tassement éventuel du matériau dans la partie active du récipient. Les plaques 42 forment, comme précédemment, un angle α par rapport à l'horizontale supérieur à l'angle de talus naturel du matériau particulaire utilisé, classiquement compris entre 20 et 30 degrés.

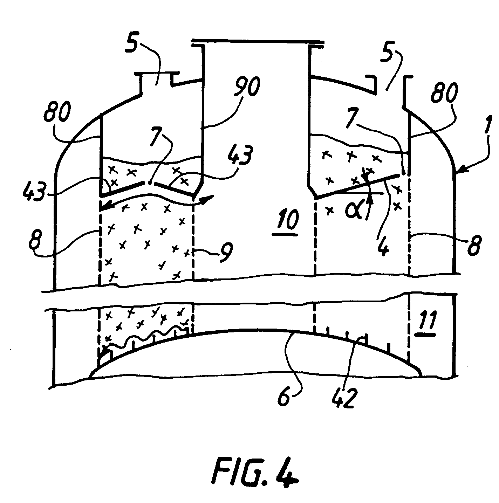

On a représenté sur la figure 4 un récipient 1 vertical contenant au moins une masse 2 annulaire de matériau particulaire retenue entre deux parois perforées concentriques 8 et 9 délimitant, dans le récipient 1, des chambres intérieure 10 et extérieure 11 entre lesquelles circule le fluide par traversée radiale de la masse 2. Selon l'invention, outre les déflecteurs verticaux 42, ici annulaires, sur le fond, ici bombé, supportant la masse 2, le récipient comporte, comme représenté sur la partie gauche de la figure 4, deux surfaces déflectrices annulaires 43 s'étendant l'une vers l'autre à partir des zones de jonction entre les grilles 8, 9, et les viroles de suspension de ces dernières 80, 90, respectivement et présentant, comme dans la réalisation de la figure 3, une section verticale en forme de V ménageant, en leur sommet, un passage 7 annulaire situé sensiblement à l'aplomb des orifices de chargement 5 et permettant, via ceux-ci, de charger l'espace entre les grilles 8 et 9 en matériau particulaire, le chargement s'effectuant, également ici, jusqu'à noyer largement les plaques déflectrices 81 et 91, comme représenté sur la figure. Comme figuré sur cette dernière par la flèche supérieure, les surfaces déflectrices 43 contraignent le flux de fluide à l'extrémité supérieure des grilles 8 et 9 à passer quasi-directement de l'espace 10 à l'espace 11, ou vice-versa, sans se perdre dans la réserve de matériau particulaire entre les viroles 80 et 90.

En variante, comme représenté sur la partie droite de la figure 4, on peut n'utiliser qu'une plaque déflectrice annulaire tronconique 4, le passage annulaire 7 étant alors défini entre l'extrémité de la plaque et la virole de suspension opposée (80), ici raccourcie.

Quoique la présente invention ait été décrite en relation avec des modes de réalisation particuliers, elle ne s'en trouve pas limitée mais est au contraire susceptible de modifications et de variantes qui apparaîtront à l'homme de l'art.

## Revendications

1. Installation de traitement d'au moins un fluide, comprenant, dans un récipient (1), au moins une masse de matériau particulaire (2) dans laquelle circule le fluide selon une direction horizontale et comportant, au voisinage de la partie supérieure de la masse, au moins une surface déflectrice (4; 41 ; 43), caractérisée en ce que la surface déflectrice (41; 42; 43) est disposée au voisinage d'un orifice (5) de chargement du matériau particulaire dans le récipient (5) aménagé dans la paroi supérieure du récipient, la surface déflectrice formant un angle avec la direction horizontale d'écoulement du fluide pour dévier localement la circulation du fluide dans la masse et formant avec un plan horizontal un angle (α) supérieur à l'angle de talus naturel du matériau particulaire.

2. Installation selon la revendication 1, caractérisée en ce qu'elle comprend, au voisinage de l'orifice (5), au moins une paire de surfaces déflectrices (4 ; 41; 42 ; 43) ayant une section sensiblement en forme de V.

3. Installation selon la revendication 2, caractérisée en ce qu'au moins le sommet du V, dirigé vers l'orifice (5) ménage un passage de remplissage (5; 7) du matériau particulier.

4. Installation selon la revendication 3, caractérisée en ce que la paire de surfaces en V (42 ; 43) est noyée dans la masse (2).

5. Installation selon l'une des revendications précédentes, caractérisée en ce que le récipient (1) est cylindrique vertical.

6. Installation selon la revendication 5, caractérisée en ce que la masse (2) est annulaire.

7. Utilisation d'une installation selon l'une des revendications précédentes, pour la séparation d'au moins un constituant d'un mélange gazeux.

8. Utilisation selon la revendication 7, où le mélange gazeux est l'air.

## Patentansprüche

1. Vorrichtung zur Behandlung mindestens eines Fluids, die in einem Behälter (1) mindestens eine Masse von teilchenförmigem Material (2) enthält, welche von dem Fluid in einer horizontalen Richtung durchströmt wird und in der Nähe ihres oberen Teils mindestens eine Ablenkfläche (4; 41; 43) aufweist, dadurch gekennzeichnet, daß die Ablenkfläche (41; 42; 43) in der Nähe einer in der Oberwand des Behälters ausgebildeten Öffnung (5) zum Beschicken des Behälters (1) mit dem teilchenförmigen Material angeordnet ist, wobei die Ablenkfläche mit der horizontalen Fluidströmungsrichtung einen Winkel bildet, wodurch der Fluidstrom in der Masse örtlich abgelenkt wird, und mit einer horizontalen Ebene einen Winkel (α) bildet, der größer als der Schüttwinkel des teilchenförmigen Materials ist.

2. Vorrichtung nach Anspruch 1, dadurch gekennzeichnet, daß sie in der Nähe der Öffnung (5) mindestens ein Paar von Ablenkflächen (4; 41; 42; 43) mit einem im wesentlichen V-förmigen Querschnitt aufweist.

3. Vorrichtung nach Anspruch 2, dadurch gekennzeichnet, daß zumindest in der zur Öffnung (5) zeigenden Spitze des V ein Durchgang (5; 7) zum Einfüllen des teilchenförmigen Materials ausgespart ist.

4. Vorrichtung nach Anspruch 3, dadurch gekennzeichnet, daß das Paar von V-förmigen Flächen (42; 43) in die Masse (2) eintaucht.

5. Vorrichtung nach einem der vorhergehenden Ansprüche, dadurch gekennzeichnet, daß der Behälter (1) vertikalzylindrisch ist.

6. Vorrichtung nach Anspruch 5, dadurch gekennzeichnet, daß die Masse (2) ringförmig ist.

7. Verwendung einer Vorrichtung nach einem der vorhergehenden Ansprüche zur Abtrennung mindestens eines Bestandteils aus einem Gasgemisch.

8. Verwendung nach Anspruch 7 mit Luft als Gasgemisch.

## Claims

1. Apparatus for treating at least one fluid, comprising, in a container (1) at least one mass of particulate material (2) in which the fluid circulates in a horizontal direction and having, in the vicinity of the upper part of the mass, at least one deflecting surface (4; 41; 43), characterized in that the deflecting surface (41; 42; 43) is placed in the vicinity of an orifice (5) for loading the particulate material into the container (1), the said orifice being provided in the upper wall of the container, the deflecting surface making an angle with the horizontal direction of flow of the fluid, in order to deflect locally the flow of the fluid in the mass, and making, with a horizontal plane, an angle (α) greater than the natural angle of repose of the particulate material.

2. Apparatus according to Claim 1, characterized in that it comprises, in the vicinity of the orifice (5), at least one pair of deflecting surfaces (4; 41; 42; 43) having a cross section substantially in the shape of a V.

3. Apparatus according to Claim 2, characterized in that at least the apex of the V, oriented towards the orifice (5), is provided with a filling passage (5; 7) for the particulate material.

4. Apparatus according to Claim 3, characterized in that the pair of V-shaped surfaces (42; 43) is embedded in the mass (2).

5. Apparatus according to one of the preceding claims, characterized in that the container (1) is cylindrical and vertical.

6. Apparatus according to Claim 5, characterized in that the mass (2) is annular.

7. Use of an apparatus according to one of the preceding claims, for the separation of at least one component of a gas mixture.

8. Use according to Claim 7, where the gas mixture is air.
